# EUROPÄISCHE PATENTSCHRIFT

(11) **EP 2 716 546 B1**
(45) Veröffentlichungstag und Bekanntmachung des Hinweises auf die Patenterteilung: **13.06.2018**
(21) Anmeldenummer: 13199330.5
(22) Anmeldetag: 09.03.2010
(51) Int. Cl.: B64D 11/02, B64D 11/04

(54) **Monumentenkomplex für einen Flugzeugheckbereich**
Monument complex for the rear area of an aircraft
Module d'aménagement pour la zone arrière d'un avion

(30) Priorität: 23.04.2009 DE 102009018690; 23.04.2009 US 172023 P
(43) Veröffentlichungstag der Anmeldung: 09.04.2014
(62) Teilanmeldung aus: 10707050.0
(73) Patentinhaber: Airbus Operations GmbH, 21129 Hamburg (DE)
(72) Erfinder: Ehlers, Bernd, 20144 Hamburg (DE); Herzog, Mark, 22885 Barsbüttel (DE)
(74) Vertreter: LKGLOBAL Lorenz & Kopf PartG mbB Patentanwälte

(56) Entgegenhaltungen:
- WO-A2-2004/076279
- US-A- 6 003 813
- US-A1- 2007 278 346
- US-A1- 2009 065 641
- US-B1- 6 464 169
- N.N. N.N. N.N.: "American Airlines Seating Guide", , 31 May 1983 (1983-05-31), pages 1-8, XP055400728, Airports in USA Retrieved from the Internet: URL:https://airlinespastpresent.blogspot.d e/2012/01/american-airlines-seating-guide- map.html [retrieved on 2017-08-23]

## Beschreibung

### Gebiet der Erfindung

Die Erfindung betrifft die Ausstattung von Flugzeugkabinen. Insbesondere betrifft die Erfindung ein Luftfahrzeug mit einem Monumentenkomplex zur Anbringung in einem Heckbereich einer Kabine des Luftfahrzeugs.

### Technologischer Hintergrund

In heutigen Flugzeugen besitzen Monumente, wie beispielsweise Bordtoilettenmonumente (Lavatories) oder Küchenmonumente (Galleys), drei oder vier ebene Wände.

WO 2004/076279 A2 beschreibt eine Flugzeugtoilettenanordnung mit mehreren Toiletten für den Heckbereich einer Flugzeugkabine. Es ist ein Eingangsbereich vorgesehen, der vor den Pissoirs im Heckbereich und hinter den Waschbecken im Vorderbereich der Anordnung angeordnet ist.

CA 2 640 123 A1 und EP 1 986 914 A1 beschreiben eine Galleyanordnung für ein Flugzeug, die vier ebene Wände aufweist.

US 6,003,813 A beschreibt eine Luftfahrzeugkabine mit einem linken und einem rechten Toilettenmodul im Heckbereich, welche vor dem durch die gekrümmte Kontur des Druckschotts aufgespannten Raum angeordnet sind.

US 6,464,169 B1 beschreibt eine Flugzeugkabine mit einem Toilettenmodul im Heckbereich, dessen Waschbecken vor der Toilette angeordnet ist.

US 2007/0278346 A1 beschreibt eine Flugzeugkabine mit einem linken und einem rechten Toilettenmodul im Heckbereich, welche vor dem durch die gekrümmte Kontur des Druckschotts aufgespannten Raum angeordnet sind.

### Zusammenfassung der Erfindung

Es ist eine Aufgabe der Erfindung, eine Anordnung von Systemkomponenten in einer Passagierkabine eines Flugzeugs anzugeben, welche möglichst wenig Kabinenraum einnimmt.

Es ist ein Luftfahrzeug mit einem Monumentenkomplex zur Anbringung in einem Heckbereich einer Kabine des Luftfahrzeugs gemäß den Merkmalen des unabhängigen Anspruchs angegeben. Weiterbildungen der Erfindung ergeben sich aus den Unteransprüchen.

Gemäß einem Ausführungsbeispiel der Erfindung ist ein Luftfahrzeug mit einem Monumentenkomplex zur Anbringung in einem Heckbereich einer Kabine des Luftfahrzeugs angegeben, welcher eine Systemkomponente, ein linkes Toilettenmodul und ein rechtes Toilettenmodul mit jeweils einer Toilette und einem Waschbecken, wobei die Toilettenmodule über eine Trennwand voneinander getrennt sind, eine rückseitige Kontur und einen Eintrittsbereich aufweist. Bei der Systemkomponente handelt es sich um einen Waschtisch mit den beiden Waschbecken. Der Eintrittsbereich ist vor der Systemkomponente angeordnet und die rückseitige Kontur des Monumentenkomplexes ist zumindest teilweise an eine Kontur des Heckbereichs der Kabine angepasst.

Dass der Eintrittsbereich "vor" der Systemkomponente angeordnet ist, bedeutet, dass sich der Eintrittsbereich in Flugrichtung vor der Systemkomponente befindet, wenn der Monumentenkomplex in der Kabine des Luftfahrzeugs eingebaut ist. Mit anderen Worten betritt der Passagier von der Kabine den Eintrittsbereich des Monumentenkomplexes und kann sich dann weiter bewegen in Richtung auf die Systemkomponente.

Dass die rückseitige Kontur des Monumentenkomplexes zumindest teilweise an die Kontur des Heckbereichs der Kabine angepasst ist, bedeutet, dass es sich bei der Rückseite des Monumentenkomplexes um keine ebene Wand handelt, da die Kontur des Heckbereiches der Kabine im Regelfall eine dreidimensional gekrümmte Fläche darstellt.

Gemäß einem weiteren Ausführungsbeispiel der Erfindung ist die rückseitige Kontur der Kabine durch ein Druckschott vorgegeben.

Gemäß der Erfindung definiert die rückseitige Kontur der Kabine einen Raum, wobei die Systemkomponente zumindest teilweise in dem definierten Raum angeordnet ist.

Gemäß einem weiteren Ausführungsbeispiel der Erfindung ragt der Monumentenkomplex und zumindest einige der darin verbauten Teile, wie beispielsweise ein Waschtisch samt Unterschrank und darin enthaltene Systemtechnik, zumindest teilweise oder gänzlich in den durch die rückseitige Kontur definierten Raum hin.

Beispielsweise weist der Monumentenkomplex eine zweite Systemkomponente auf, bei der es sich um eine Toilette handelt. Natürlich können noch weitere Systemkomponenten, wie beispielsweise eine zweite oder dritte Toilette und/oder mehrere weitere Waschtische, vorgesehen sein.

Gemäß einem weiteren Ausführungsbeispiel der Erfindung ist die rückseitige Kontur als dreidimensional gekrümmte Fläche ausgebildet.

Beispielsweise weist der Monumentenkomplex zwei Bortoilettenmodule auf.

Die beiden Bordtoilettenmodule können getrennt voneinander oder integral ausgeführt sein. In anderen Worten kann der Monumentenkomplex mehrteilig ausgeführt sein oder einteilig.

Gemäß einem weiteren Ausführungsbeispiel der Erfindung weist der Monumentenkomplex ein Küchenmodul oder mehrere solche Küchenmodule auf.

Der Monumentenkomplex kann also eine Bordküche und/oder einen Bordtoilettenkomplex enthalten.

Gemäß einem weiteren Ausführungsbeispiel der Erfindung weist der Monumentenkomplex eine erste Tür zu einem ersten Teilbereich des Monumentenkomplexes und eine zweite Tür zu einem zweiten Teilbereich des Monumentenkomplexes auf, wobei die erste Tür und die zweite Tür einen Winkel ungleich 180 Grad zueinander einschließen.

Auf diese Weise kann wertvoller Raum in der Passagierkabine eingespart werden, da die beiden Türen nicht senkrecht zur Flugzeuglängsachse angeordnet sind, sondern schräg zur Längsachse.

Beispielsweise weist der Monumentenkomplex eine Trennwand zum Abtrennen der beiden Bordtoilettenmodule voneinander auf, wobei die Trennwand in der Mitte des Monumentenkomplexes angeordnet ist.

Im Falle der Ausführung des Monumentenkomplexes in Form von zwei getrennten Bordtoilettenmodulen ist die Trennwand doppelwandig ausgeführt (es handelt sich also beispielsweise um zwei getrennte Trennwände), wobei die eine Trennwand zum einen Bordtoilettenmodul und die andere Trennwand zu dem anderen Bordtoilettenmodul gehört.

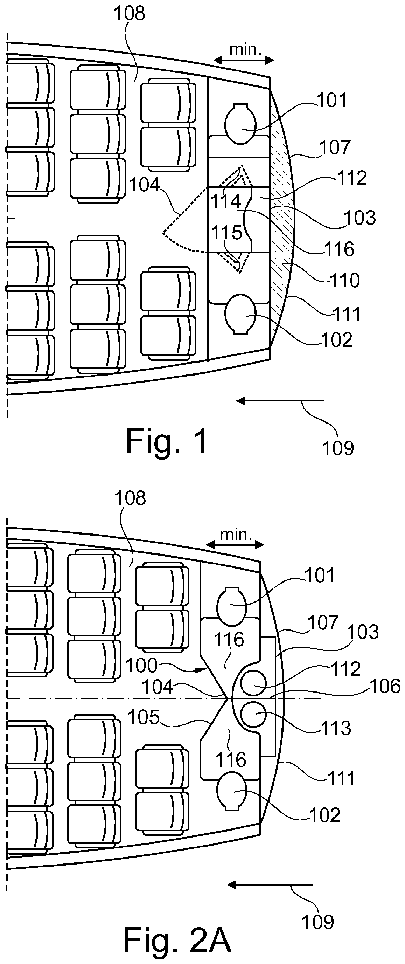

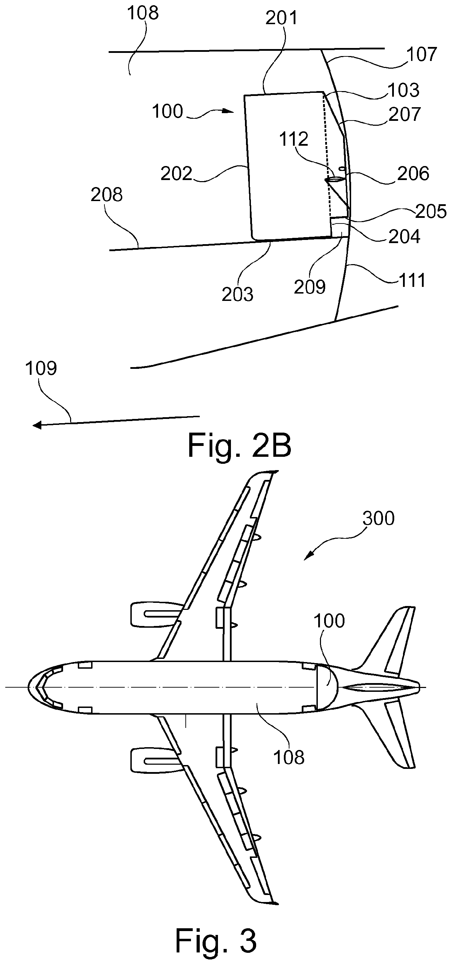

Gemäß einem weiteren Ausführungsbeispiel der Erfindung ist die rückseitige Kontur als zusammenhängende Wand ausgebildet. Diese zusammenhängende Wand kann stufenförmig (wie beispielsweise in Fig. 2A dargestellt) ausgebildet oder zwei- oder gar dreidimensional gekrümmt sein (wie in Fig. 3 dargestellt).

Gemäß einem weiteren Ausführungsbeispiel der Erfindung ist der Monumentenkomplex in Form von zwei Teilmodulen ausgeführt, die bei Installation in der Kabine des Luftfahrzeugs getrennt voneinander in die Kabine eingeführt werden. Die Teilmodule werden dann erst in der Kabine miteinander verbunden, falls überhaupt erforderlich.

Gemäß der Erfindung handelt es sich bei der Kabine um eine Passagierkabine eines Verkehrsflugzeugs.

Gemäß einem weiteren Ausführungsbeispiel der Erfindung ist ein Luftfahrzeug mit einem oben und im Folgenden beschriebenen Monumentenkomplex angegeben.

Bei dem Luftfahrzeug handelt es sich beispielsweise um ein Passagierflugzeug (mit oder ohne Druckkabine) oder aber auch um einen Helikopter oder ein Luftschiff (Zeppelin).

Im Folgenden werden mit Verweis auf die Figuren Ausführungsbeispiele der Erfindung beschrieben.

### Kurze Beschreibung der Figuren

Fig. 1 zeigt eine Ansicht eines Heckbereichs einer Flugzeugkabine mit einem darin angeordneten Monumentenkomplex.
Fig. 2A zeigt eine Ansicht eines Heckbereichs einer Flugzeugkabine gemäß einem Ausführungsbeispiel der Erfindung.
Fig. 2B zeigt den Heckbereich der Fig. 2A von der Seite ausgesehen.
Fig. 3 zeigt ein Luftfahrzeug mit einem Monumentenkomplex gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt einen Heckbereich einer Passagierkabine 108 eines Flugzeugs. Der Pfeil 109 symbolisiert die Flugrichtung. In dem Heckbereich ist ein Toilettenkomplex angeordnet, der zwei Toiletten 101, 102 aufweist. Es ist eine Haupteingangstür 104 vorgesehen, die nach außen (also nach vorne zur Passagierkabine hin) öffnet. Der Benutzer betritt durch diese Tür 104 den Eingangsbereich oder Eintrittsbereich 116. Hinter dem Eintrittsbereich 116 ist ein Waschtisch 112 angeordnet.

Links und rechts von dem Eintrittsbereich 116 sind die beiden Toilettenmodule mit den Toiletten 101, 102 vorgesehen. Die Module lassen sich über die Falttüren 114 bzw. 115 öffnen.

Der Komplex ist direkt vor dem hinteren Druckschott 111 angeordnet, welches üblicherweise zur Kabinenseite hin konkav ausgeführt ist. Auf diese Wiese entsteht dort ein "toter" ungenutzter Raum. Dieser Raum kann nicht für Kabinenfünktionen genutzt werden.

Der durch die gewölbte Kontur 107 des Druckschotts 111 definierte "tote" Raum 110 wird von den Toilettenmodulen nicht genutzt. Die rückseitige Kontur 103 der Module ist in Form einer ebenen Wand ausgeführt.

Fig. 2A zeigt einen Monumentenkomplex 100 gemäß einem Ausführungsbeispiel der Erfindung, der im Heckbereich der Passagierkabine 108 angeordnet ist.

Der Monumentenkomplex 100 weist zwei einzelne Toilettenmodule mit je einer Toilette 101, 102 auf. Die beiden Toilettenmodule stoßen aneinander an und sind über die Trennwand 106 voneinander getrennt. Es können auch zwei solche Trennwände 106 vorgesehen sein, jeweils eine für eines der beiden Module.

Weiterhin ist ein zusammenhängender oder zweigeteilter Waschtisch vorgesehen (siehe Bezugszeichen 112, 113) mit jeweils einem Waschbecken für das linke und das rechte Toilettenmodul.

Im Falle eines eingeteilten Waschtisches weist die Trennwand 106 eine entsprechende Aussparung auf, durch welche der Waschtisch verläuft.

Es sind zwei Türen 104, 105 vorgesehen, eine für das linke Modul mit der Toilette 101 und eine für das rechte Modul mit der Toilette 102. Die beiden Türen schließen einen Winkel ungleich 180 Grad zueinander ein. Im Falle des Ausführungsbeispiels der Fig. 2A beträgt der Winkel in etwa 120 Grad. Der Winkel könnte aber auch etwa 90 Grad betragen.

Durch diesen Winkel wird zusätzlicher Platz in der Passagierkabine gewonnen. Durch die linke Tür 104 gelangt der Benutzer in den oberen Eintrittsbereich 116 und durch die rechte Tür 105 gelangt der Benutzer in den rechten ("unteren") Eintrittsbereich 116 des zweiten Toilettenmoduls.

Die rückseitige Kontur 103 des Monumentenkomplexes ist an die Form des Heckbereichs der Kabine angepasst, insbesondere also an die Form des Druckschotts 111. Dies wird dadurch erreicht, dass der bzw. die Waschtische 112, 113 teilweise in dem durch die Krümmung des Druckschotts definierten Raum angeordnet sind. Hierdurch wird zusätzlicher Platz in Flugrichtung 109 gewonnen.

Wie in Fig. 1 zu sehen, ist der Toilettenkomplex (Lavatory) in X-Länge (also in Flugrichtung 109) minimiert. Aufgrund dieser Ausführungsform (nur ein Waschtisch mit verengtem Zugang) ist keine bequeme Nutzung möglich. Eine klassische Vergrößerung der Lavatory in Flugrichtung 109 würde den Verlust von wertvollen Sitzplätzen zur Folge haben.

Wie in Fig. 2A zu sehen, wird das Gesamtvolumen der Lavatory vergrößert, ohne dass der Monumentenkomplex in Flugrichtung 109 ausgedehnt wird. Dadurch wird der bewegungsfreie Raum innerhalb der Lavatory vergrößert. Das Beispiel in Fig. 2A zeigt, wie aus der in Fig. 1 gezeigten Lavatory durch die Vergrößerung überhaupt erst eine bequem nutzbare Lavatory bereitgestellt ist, ohne dass hierdurch Sitzplätze entfallen müssten. Beispielsweise ist der Waschtisch 112, 113 sowie der Unterschrank mit der enthaltenen Systemtechnik in den neugewonnenen Raum (zumindest teilweise) verlegt. Der Anbau von kastenförmigen Erweiterungen bedeutet in der Herstellung einen geringen Zusatzaufwand, der Gewinn von einigen Zoll Kabinenlänge dagegen einen großen Nutzen.

Es handelt sich also um eine Lavatory mit Raumausnutzung in der Bulkhead-Wölbung.

Ein Kernaspekt der Erfindung besteht darin, dass die dem Druckschott zugewandte Wand des Monumentenkomplexes (hier der Lavatory) so gestaltet wird, dass sich eine optimierte Raumausnutzung ergibt. Anstelle einer ebenen Wand wird eine der Druckschottkontur angenäherte Kontur der Wand verbaut. So kann durch den neu gewonnenen Raum ein zusätzliches Waschbecken vorgesehen sein, wie in Fig. 2A und 2B gezeigt. Weiterhin vergrößert sich der nutzbare Eintrittsbereich.

Dabei kann auf gleiche Materialien und Bauweisen zurückgegriffen werden, welches üblicherweise für Monumentrückwände verwendet werden.

Eine weitere Verbesserung kann durch eine als Offset (dreidimensional gekrümmte Fläche) des Druckschotts ausgeführte Wand erzielt werden, wie sie in Fig. 3 zu sehen ist.

Fig. 2B zeigt eine Seitenansicht des Bereichs der Fig. 2A. Der Monumentenkomplex 100 weist eine Decke 201, eine Vorderwand 202, einen Boden 203 und mehrere Rückwandsegmente 204, 205, 206, 207 auf.

Die verschiedenen Segmente der Rückwand können integral verbunden sein. Der Monumentenkomplex ist auf dem Kabinenboden 208 angeordnet.

Wie in Fig. 2B zu erkennen, schließen die Rückwandsegmente 204, 205 einen Freiraum 209 ein, in dem sich Systemleitungen befinden können, die die Systemkomponenten des Monumentenkomplexes an die Flugzeugversorgung anschließen. Hierfür ist das erste Segment 204 vertikal und das zweite Segment 205 horizontal angeordnet.

Fig. 3 zeigt ein Luftfahrzeug 300 mit einem im Heckbereich angeordneten Monumentenkomplex 100 mit einer zweidimensional oder dreidimensional gekrümmt geformten Rückwand.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Luftfahrzeug mit einem Monumentenkomplex, der in einem Heckbereich einer Kabine eines Luftfahrzeugs angebracht ist, der Monumentenkomplex (100) aufweisend:
eine Systemkomponente (112, 113);
ein linkes Toilettenmodul und ein rechtes Toilettenmodul mit jeweils einer Toilette (101, 102) und einem Waschbecken (112, 113), wobei die Toilettenmodule über eine Trennwand (106) voneinander getrennt sind;
eine rückseitige Kontur (103);
einen Eintrittsbereich (116);
wobei der Eintrittsbereich (116) in Flugrichtung vor der Systemkomponente (112, 113) angeordnet ist; und
wobei die rückseitige Kontur (103) zumindest teilweise an eine Kontur (107) des Heckbereichs der Kabine angepasst ist und die Kontur (107) einen Raum definiert, in dem die Systemkomponente (112, 113) zumindest teilweise angeordnet ist,
**dadurch gekennzeichnet, dass** es sich bei der Systemkomponente um einen Waschtisch mit den beiden Waschbecken (112, 113) handelt.

2. Luftfahrzeug nach Anspruch 1,
wobei die rückseitige Kontur (103) zumindest teilweise an eine dreidimensional gekrümmte Kontur (107) eines Druckschotts im Heckbereich der Kabine angepasst ist und die Kontur (107) des Druckschotts einen Raum definiert, in dem die Systemkomponente (112, 113) zumindest teilweise angeordnet ist.

3. Luftfahrzeug nach einem der vorhergehenden Ansprüche,
wobei die rückseitige Kontur (103) als dreidimensional gekrümmte Fläche ausgebildet ist.

4. Luftfahrzeug nach einem der vorhergehenden Ansprüche,
wobei der Monumentenkomplex und darin verbaute Teile, wie beispielsweise der Waschtisch samt Unterschrank und darin enthaltene Systemtechnik zumindest teilweise oder gänzlich in den durch die rückseitige Kontur (103) definierten Raum hineinragt.

5. Luftfahrzeug nach einem der vorhergehenden Ansprüche, weiterhin aufweisend:
eine erste Tür (104) zu einem ersten Teilbereich des Monumentenkomplexes (100);
eine zweite Tür (105) zu einem zweiten Teilbereich des Monumentenkomplexes (100);
wobei die erste Tür und die zweite Tür einen Winkel ungleich 180 Grad einschließen.

6. Luftfahrzeug nach Anspruch 5,
wobei die erste Tür (104) eine Tür für das erste Toilettenmodul ist;
wobei die zweite Tür (105) eine Tür für das zweite Toilettenmodul ist.

7. Luftfahrzeug nach einem der vorhergehenden Ansprüche,wobei die Trennwand (106) in der Mitte des Monumentenkomplexes (100) angeordnet ist.

8. Luftfahrzeug nach einem der vorhergehenden Ansprüche,
wobei die rückseitige Kontur (103) als zusammenhängende Wand ausgebildet ist.

9. Luftfahrzeug nach einem der vorhergehenden Ansprüche,
wobei der Monumentenkomplex in Form von zwei Teilmodulen ausgeführt ist, die bei Installation in der Kabine getrennt voneinander in die Kabine eingeführt werden.

10. Luftfahrzeug nach einem der vorhergehenden Ansprüche,
wobei es sich bei der Kabine um eine Passagierkabine handelt.

## Claims

1. Aircraft comprising a monument complex mounted in a rear area of a cabin of an aircraft, the monument complex (100) comprising:
a system component (112, 113);
a left-hand lavatory module and a right-hand lavatory module, each comprising a lavatory (101, 102) and a wash basin (112, 113), wherein the lavatory modules are separated from each other by way of a dividing wall (106);
a rear contour (103);
an entrance region (116);
wherein the entrance region (116) is arranged in front of the system component (112, 113) with respect to a flight direction; and
wherein the rear contour (103) is at least partially adapted to a contour (107) of the rear area of the cabin and the contour (107) defines a space, in which the system component (112, 113) is at least partially arranged,
**characterized in, that**
the system component is a wash basin surrounds comprising both wash basins (112, 113).

2. Aircraft of claim 1,
wherein the rear contour (103) is at least partially adapted to a three-dimensionally curved contour (107) of a bulkhead in the rear area of the cabin and the contour (107) of the bulkhead defines a space, in which the system component (112, 113) is at least partially arranged.

3. Aircraft of any one of the preceding claims,
wherein the rear contour (103) is designed as a three-dimensionally curved surface.

4. Aircraft of any one of the preceding claims,
wherein the monument complex and components installed therein, for example the wash basin surrounds including a floor cupboard and systems engineering equipment contained therein, project at least partially or entirely into the space defined by the rear contour (103).

5. Aircraft of any one of the preceding claims, further comprising:
a first door (104) to a first sub-area of the monument complex (100);
a second door (105) to a second sub-area of the monument complex (100);
wherein the first door and the second door encompass an angle other than 180 degrees relative to each other.

6. Aircraft of claim 5,
wherein the first door (104) is a door for the first lavatory module;
wherein the second door (105) is a door for the second lavatory module.

7. Aircraft of any one of the preceding claims, wherein the dividing wall (106) is arranged in the middle of the monument complex (100).

8. Aircraft of any one of the preceding claims,
wherein the rear contour (103) is designed as a continuous wall.

9. Aircraft of any one of the preceding claims,
wherein the monument complex is designed in the form of two sub-modules which during installation in the cabin are inserted separately from each other into the cabin.

10. Aircraft of any one of the preceding claims,
wherein the cabin is a passenger cabin.

## Revendications

1. Aéronef comprenant un ensemble structure, qui est monté dans une zone arrière d'une cabine d'un aéronef, l'ensemble structure (100) comportant :
un composant système (112, 113) ;
un module gauche de toilettes et un module droit de toilettes comprenant respectivement des toilettes (101, 102) et un lavabo (112, 113), les modules de toilettes étant séparés l'un de l'autre par une paroi de séparation (106) ;
un contour arrière (103) ;
une zone d'entrée (116) ;
la zone d'entrée (116) étant disposée devant le composant système (112, 113) dans la direction de vol ; et
le contour arrière (103) étant adapté au moins en partie à un contour (107) de la zone arrière de la cabine et le contour (107) définissant un espace, dans lequel le composant système (112, 113) est disposé au moins en partie,
**caractérisé en ce que** le composant système est un plan-vasque avec les deux lavabos (112, 113).

2. Aéronef selon la revendication 1,
dans lequel le contour arrière (103) est adapté au moins en partie à un contour (107) incurvé de manière tridimensionnelle d'une cloison étanche dans la zone arrière de la cabine et le contour (107) de la cloison étanche définit un espace, dans lequel le composant système (112, 113) est disposé au moins en partie.

3. Aéronef selon l'une des revendications précédentes,
dans lequel le contour arrière (103) est réalisé sous la forme d'une surface incurvée de manière tridimensionnelle.

4. Aéronef selon l'une des revendications précédentes,
dans lequel l'ensemble structure et des parties montées dans celui-ci, par exemple le plan-vasque avec armoire inférieure et technique du système contenue dans celle-ci, dépasse au moins en partie ou entièrement dans l'espace défini par le contour arrière (103).

5. Aéronef selon l'une des revendications précédentes, comportant en outre :
une première porte (104) donnant sur une première zone partielle de l'ensemble structure (100) ;
une seconde porte (105) donnant sur une seconde zone partielle de l'ensemble structure (100) ;
la première porte et la seconde porte formant un angle différent de 180 degrés.

6. Aéronef selon la revendication 5,
dans lequel la première porte (104) est une porte pour le premier module de toilettes ;
dans lequel la seconde porte (105) est une porte pour le second module de toilettes.

7. Aéronef selon l'une des revendications précédentes,
dans lequel la paroi de séparation (106) est disposée au centre de l'ensemble structure (100).

8. Aéronef selon l'une des revendications précédentes,
dans lequel le contour arrière (103) est réalisé sous la forme d'une paroi continue.

9. Aéronef selon l'une des revendications précédentes,
dans lequel l'ensemble structure est exécuté sous la forme de deux modules partiels, qui sont introduits dans la cabine séparément l'un de l'autre lors de l'installation de la cabine.

10. Aéronef selon l'une des revendications précédentes,
dans lequel la cabine est une cabine passagers.
